# EUROPÄISCHE PATENTSCHRIFT

(11) **EP 0 716 994 B1**
(45) Veröffentlichungstag und Bekanntmachung des Hinweises auf die Patenterteilung: **20.05.1998**
(21) Anmeldenummer: 95110605.3
(22) Anmeldetag: 07.07.1995
(51) Int. Cl.: B65G 63/00

(54) **Anlage zum Schnellumschlag von Transportgut, insbesondere von Ladeeinheiten für den kombinierten Ladungsverkehr**
Installation for quick transloading of goods, especially of freight units for combined road-rail transport
Installation pour le transbordement rapide de marchandises, notamment d'unités de fret pour le transport combiné rail-route

(30) Priorität: 14.12.1994 DE 4444418
(43) Veröffentlichungstag der Anmeldung: 19.06.1996
(73) Patentinhaber: Hilgers AG, D-56598 Rheinbrohl (DE)
(72) Erfinder: Sarres, Dietrich, D-32427 Minden (DE)
(74) Vertreter: COHAUSZ HASE DAWIDOWICZ & PARTNER

(56) Entgegenhaltungen:
- DE-A- 4 120 922
- US-A- 1 900 867

## Beschreibung

Die Erfindung betrifft eine Anlage zum Schnellumschlag von Transportgut, insbesondere von Ladeeinheiten für den kombinierten Ladungsverkehr, die neben den Streckengleisen parallelverlaufende, zuglange Umschlaggleise, über denen im Umschlagbereich kein Oberleitungsfahrdraht vorgesehen ist, danebenliegend angeordnete Eingangs- und Ausgangslager und ebenfalls parallelverlaufende Fahrbahnen für Straßenfahrzeuge aufweist, über denen mehrere in Gleislängsrichtung parallelverlaufende Portalkrane vorgesehen sind, und an der Lastaufnahmestellen angeordnet sind, die eine Lastbewegung quer zur Fahrbahnlängsrichtung ermöglichen.

Der kombinierte Ladungsverkehr wird bisher in Umschlagbahnhöfen unterschiedlicher Größe im wesentlichen mit schienenfahrbaren Portalkranen, die ggf. zusätzlich mit Kragarmen ausgerüstet sind, durchgeführt. Für die zukünftig zu erwartenden Umschlagmengen im kombinierten Ladungsverkehr reicht diese Umschlagtechnik nicht mehr aus und es müssen neue Schnellumschlagsysteme gefunden werden. Von einigen Firmen wurden alternative Schnellumschlagsysteme vorgeschlagen, bei denen für das Ab- und Aufladen der umzuschlagenden Ladeeinheiten Schnellumschlaggeräte zur Anwendung kommen, die schienenseitig einen vollautomatischen und straßenseitig einen semiautomatischen Schnellumschlag ermöglichen sollen. Diese Lösungen basieren auf z.T. noch nicht erprobten technischen Entwicklungen, deren Einsatzreife bisher auch noch nicht nachgewiesen wurde.

Eine weitere bekannte Lösung (DE-OS 41 20 922 - B 65 G, 63/00) sieht auf unterschiedlichen Seiten des Schienenverkehrsweges ein Eingangs- und Ausgangslager für die umzuschlagenden Ladeeinheiten vor, an welche sich nach außen hin der zugehörige Entlade- bzw. Belade-Straßenverkehrsweg anschließt. Ein Nachteil dieser Lösung besteht darin, daß für die ankommenden umzuschlagenden Ladeeinheiten kein Direktumschlag von Schiene auf Straße und umgekehrt möglich ist, sondern die Ladegüter in jedem Falle einen Zwischentransport erfahren. Dies erfordert eine hohe Umschlagkapazität und verlängert die Umschlagzeit.

Ziel der Erfindung ist es, die Anlage zum Schnellumschlag von Transportgut, insbesondere von Ladeeinheiten für den kombinierten Ladungsverkehr so zu gestalten, daß die Umschlagzeit für die Ladeeinheiten und damit auch die Transportzeit für den Güterverkehr wesentlich verringert werden kann.

Der Erfindung liegt die Aufgabe zugrunde, eine Anlage zum Schnellumschlag von Transportgut der eingangs genannten Art zu schaffen, die bei der Vermeidung der Mängel des Standes der Technik für den Umschlag von verschieden großen Ladeeinheiten geeignet ist und mit der eine Entkoppelung zwischen der Zugbehandlung, der Bedienung der Kunden-LKW und der Lagerarbeiten gewährleistet ist.

Erfindungsgemäß wird diese Aufgabe erreicht durch einen parallel zur Gleislängsrichtung angeordneten zuglangen, ein oder mehrere Umschlaggleise, eine Ladespur und die Fahrspur für die Kunden-LKW umfassenden Direktumschlagbereich, einen sich daran anschließenden und dazu parallelverlaufenden, die Ladespur, die Fahrspur für die Kunden-LKW, eine oder mehrere Kurzzeit- und Langzeitabstellspuren für die Ladeeinheiten umfassenden Lagerumschlagbereich, wobei der Direktumschlagbereich und der Lagerumschlagbereich jeweils durch einen oder mehrere Halbportalkrane überspannt sind, wobei mehrere in Gleislängsrichtung, quer zur Längsrichtung der Kranbahn angeordnete hochgeständerte, in den Greifbereich der Halbportalkrane hineinragend ausgebildete und mit diesen kooptierende Querförderer für Container und Wechselbehälter vorgesehen sind, und einen außerhalb der Umschlaganlage befindlichen Abstellplatz für Sattelanhänger sowie eine oder mehrere, außerhalb parallel neben dem Umschlaggleis im Direktumschlagbereich vorgesehene Abstellspuren für umsteigende Ladeeinheiten von Zug zu Zug.

Der Vorteil dieser Umschlaganlagen-Ausführung besteht in der Erreichung einer Entkoppelung zwischen der Zugbehandlung, der Bedienung der Kunden-LKW und Lagerarbeiten. Die Anordnung eines separaten Abstellplatzes für Sattelanhänger schafft den Vorteil, daß der Kunde für die Auf- und Absattelung keinen Platz in der Umschlaganlage blockiert und somit zur Senkung der Umschlagzeit beiträgt.

Die Erfindung ist nachstehend an einem Ausführungsbeispiel näher erläutert. Die zeichnerischen Darstellungen zeigen:
- Figur 1:: Den Querschnitt einer Anlage zum Schnellumschlag von Transportgut und
- Figur 2:: eine Draufsicht auf einen Ausschnitt der Anlage nach Figur 1 in schematischer Darstellung.

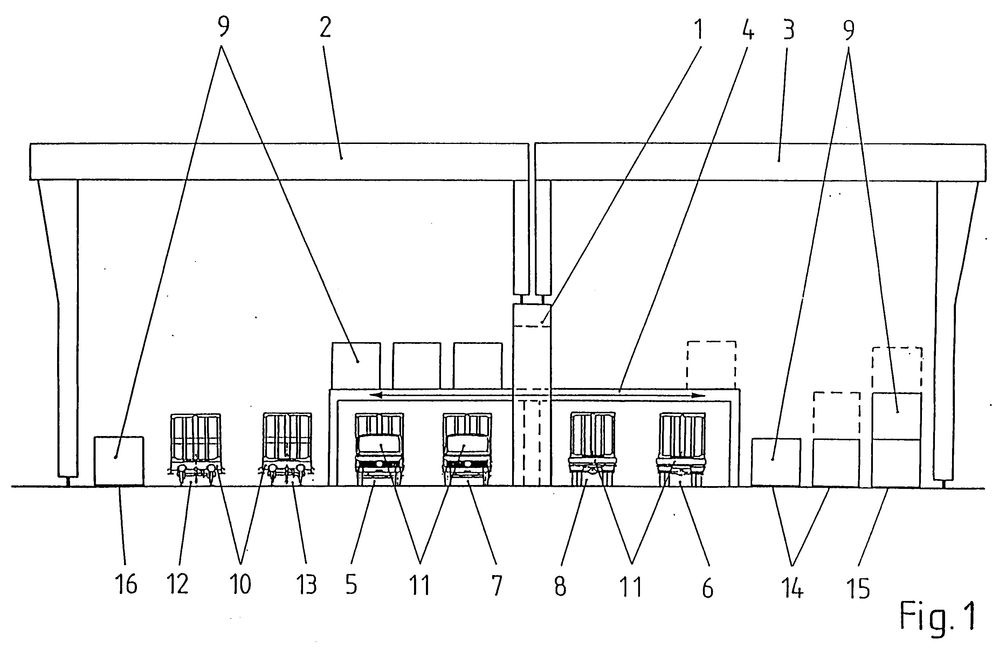

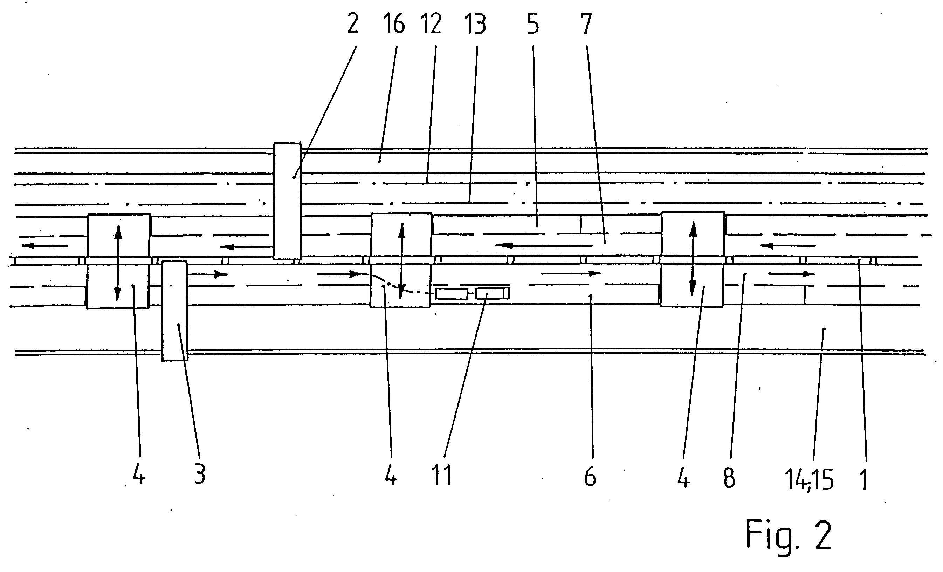

Gemäß Figur 1 enthält die Umschlaganlage eine zuglange hochgeständerte Mittelkranbahn 1, die zwei parallelverlaufende und einander nicht behindernde Halbportalkrane 2, 3 trägt. Die Verbindung zwischen den Arbeitsbereichen der Halbportalkrane 2 und 3 wird durch mehrere in Gleislängsrichtung quer zu den Fahrbahnen angeordnete Querförderer 4 hergestellt (Figur 2), die in den Greifbereich der Halbportalkrane 2, 3 hineinragen. Jeder dieser Querförderer 4 ist mit drei einzeln quer zur Gleislängsrichtung verfahrbaren, nicht dargestellten Plattformen ausgerüstet. Aus Platzersparnisgründen sind die Querförderer 4 hochgeständert und überspannen die Ladespuren 5, 6 und die Fahrspuren 7, 8 für die Kunden-LKW 11 derart, daß diese mit aufgesetzten Ladeeinheiten 9 ungehindert darunter hinwegfahren können.

Die Umschlaganlage ist in zwei nicht voneinander getrennte Bereiche unterteilt. Nach Figur 1 befindet sich der Bereich des Direktumschlages vom Schienenfahrzeug 10 auf den Kunden-LKW 11 und umgekehrt, der von den Umschlaggleisen 12, 13 und der Ladespur 5 und der Fahrspur 7 sowie einer Abstellspur 16 für umsteigende Ladeeinheiten 9 von Zug zu Zug gebildet wird, unterhalb des Halbportalkranes 2. Die Umschlaggleise 12, 13 weisen in bekannter Weise im Bereich der Kranbahn keinen Oberleitungsfahrdraht auf. Der unterhalb des Halbportalkranes 3 als Lagerumschlag dienende Bereich ist mit einer Ladespur 6 und einer Fahrspur 8 sowie einem Zwischenlagerplatz für die Ladeeinheiten 9 versehen. Der Zwischenlagerplatz ist in zwei Kurzzeitabstellspuren 14 und eine Langzeitabstellspur 15 unterteilt.

Für den Umschlag, eine Zwischenlagerung und eine eventuelle Behandlung von im kombinierten Ladungsverkehr mitbeförderten Sattelanhängern kann bei Bedarf außerhalb des Umschlagplatzes ein nicht dargestellter Abstellplatz vorgesehen werden.

In Umschlaganlagen, in denen Ladeeinheiten 9 von Zug zu Zug umsteigen müssen, werden im Direktumschlagbereich außerhalb, parallel neben den Umschlaggleisen 12, 13 eine oder mehrere Abstellspuren 16 für Umsteiger vorgesehen. Damit wird erreicht, daß die Ladeeinheiten 9 nicht die Querförderer 4 und den Lagerumschlagbereich belasten.

Die Anzahl der Ladespuren 5, 6 und der Fahrspuren 7, 8 für die Kunden-LKW 11 kann entsprechend der anfallenden Verkehrs- bzw. Umschlagmenge vergrößert und in der Endausbaustufe entsprechend festgelegt werden. Die Anzahl der Halbportalkrane 2, 3 und Querförderer 4 ist ebenfalls abhängig vom jeweiligen Verkehrsaufkommen in der Umschlaganlage und kann kontinuierlich an ggf. steigende Anforderungen angepaßt werden.

Die für den Güterumschlag bestimmten Züge werden "mit Schwung" in die Umschlaggleise 12 bzw. 13 eingefahren und zwar bewußt etwas über den Umschlagbereich hinaus, damit die Elektrolokomotive wieder unter den Oberleitungsfahrdraht außerhalb des Umschlagbereiches zu stehen kommt und den Zug auf die genaue Verladeposition zurückdrücken kann.

Für den Schnellumschlag werden die Ladeeinheiten 9 mit Hilfe des Halbportalkranes 2 von den Schienenfahrzeugen 10 direkt auf die sich in der Ladespur 5 befindlichen Kunden-LKW 11 bzw. von diesen Kunden-LKW 11 auf die Schienenfahrzeuge 10 umgeladen. Die Ladeeinheiten 9, die einer Zwischenlagerung zugeführt werden müssen, werden mittels des Halbportalkranes 2 von den Schienenfahrzeugen 10 aufgenommen und auf die Plattformen des Querförderers 4 abgestellt, der diese nach der Beladung der Plattformen automatisch in den Eingriffsbereich des Halbportalkranes 3 befördert. Die Ladeeinheiten 9 werden dann vom Halbportalkran 3 aufgenommen und in den entsprechenden Zwischenlagerbereich, d.h. entweder in die Kurzzeitabstellspuren 14 oder in die Langzeitabstellspur 15, abgesetzt. Für die umschlagbedingte Kurzzeitabstellung wird je nach Anteil der Wechselbehälter von einer Abstellung in einer Lage bei reinem Wechselbehälteraufkommen und bis zu maximal zwei Lagen bei reinem Containeraufkommen ausgegangen. Ladeeinheiten 9 für die Langzeitabstellung können in der Langzeitabstellspur 15 in drei Lagen abgestellt werden. Der Umschlag der Ladeeinheiten 9 von den Kurzzeitabstellspuren 14 bzw. der Langzeitabstellspur 15 auf die Kunden-LKW und umgekehrt erfolgt direkt mittels des Halbportalkranes 3. Unmittelbar nach der Beladung der Kunden-LKW 11 verlassen diese über die Fahrspuren 7 bzw. 8 die Umschlaganlage und geben somit den Umschlagplatz für einen nachfolgenden Kunden-LKW 11 frei.

Werden Sattelanhänger in den Zügen des kombinierten Ladungsverkehrs mitbefördert, werden diese mit Platzzugmaschinen direkt auf den außerhalb der Umschlaganlage befindlichen Abstellplatz gebracht bzw. von dort direkt zur Verladung auf Tragwagen zugestellt.

Ein ggf. notwendiger Ausgleich der Ladeeinheiten 9 über größere Entfernungen innerhalb der Umschlaganlage in Anlagenlängsrichtung kann ebenfalls mittels der Platzzugmaschinen erfolgen.

Die von Zug zu Zug umsteigenden Ladegüter 9 werden mittels des Halbportalkranes 2 von dem Schienenfahrzeug 10 auf die Abstellspur 16 für Umsteiger befördert und dort zwischengelagert. Die Verladung dieser Ladegüter 9 erfolgt in umgekehrter Reihenfolge.

## Patentansprüche

1. Anlage zum Schnellumschlag von Transportgut, insbesondere von Ladeeinheiten für den kombinierten Ladungsverkehr, die neben den Streckengleisen parallelverlaufende, zuglange Umschlaggleise (12, 13), über denen im Umschlagbereich kein Oberleitungsfahrdraht vorgesehen ist, danebenliegend angeordnete Eingangs- und Ausgangslager und ebenfalls parallelverlaufende Fahrbahnen für Straßenfahrzeuge aufweist, über denen mehrere in Gleislängsrichtung parallelverlaufende Portalkrane (2, 3) vorgesehen sind, und an der Lastaufnahmestellen angeordnet sind, die eine Lastbewegung quer zur Fahrbahnlängsrichtung ermöglichen, **gekennzeichnet durch** einen parallel zur Gleislängsrichtung angeordneten zuglangen, ein oder mehrere Umschlaggleise (12, 13), eine Ladespur (5) und die Fahrspur (7) für die Kunden-LKW (11) umfassenden Direktumschlagbereich, einen sich daran anschließenden und dazu parallelverlaufenden, die Ladespur (6), die Fahrspur (8) für die Kunden-LKW (11), eine oder mehrere Kurzzeitabstellspuren (14) und Langzeitabstellspur (15) für die Ladeeinheiten (9) umfassenden Lagerumschlagbereich, wobei der Direktumschlagbereich und der Lagerumschlagbereich jeweils durch einen Halbportalkran (2 bzw. 3) überspannt sind und wobei mehrere in Gleislängsrichtung, quer zur Längsrichtung der Mittelkranbahn (1) bewegbare, hochgeständerte, in den Greifbereich der Halbportalkräne (2 und 3) hineinragend ausgebildete und mit diesen kooptierende Querförderer (4) für Container und Wechselbehälter vorgesehen sind, und einen außerhalb der Umschlaganlage befindlichen Abstellplatz für Sattelanhänger sowie eine oder mehrere, außerhalb parallel neben dem Umschlaggleis (12) im Direktumschlagbereich vorgesehene Abstellspuren (16) für umsteigende Ladeeinheiten (9) von Zug zu Zug.

## Claims

1. An installation for the quick transloading of goods, more particularly of freight units for combined rail-road traffic, which has train-long transloading lines (12, 13) which extend parallel with the railway lines and above which no overhead contact wires are provided in the transloading zone; arrival and delivery stores being disposed therebeside and also driving tracks extending in parallel for road vehicles above which a number of portal cranes (2, 3) are provided extending parallel in the longitudinal direction of the rails, load receiving positions being provided which enable a load to move transversely of the longitudinal direction of the driving track, characterised by: a train-length direct transloading zone disposed parallel with the longitudinal direction of the railway lines and comprising the transloading lines (12, 13), a loading track (5) and the driving track (7) for the customers' lorries (11); a directly adjoining storage transloading zone extending parallel with the direct transloading zone and comprising the loading track (6), the driving track (8) for the customers' lorries (11) and one or more short-term and long-term siding tracks (14, 15) for freight units (9), the direct and storage transloading zones each being spanned by a semiportal crane (2; 3); a number of transverse conveyers (4) for containers and interchangeable containers which have high uprights and are disposed in the longitudinal direction of the railway lines transversely of the longitudinal direction of the central craneway and are constructed to extend into the operating zone of the semiportal cranes (2 and 3) and co-operate therewith; a siding location for semitrailers situated outside the transloading installation; and one or more siding tracks (16) provided outside and parallel alongside with the transloading railway line for freight units to be transloaded from train to train.

## Revendications

1. Installation pour le transbordement rapide de marchandises, en particulier d'unités de chargement pour le transport combiné de charges, qui présente, à côté des voies de circulation s'étendant parallèlement, des voies de transbordement (12, 13) de la longueur d'un train, au-dessus desquelles n'est disposé aucun conducteur aérien dans la zone de transbordement, des entrepôts de départ et d'arrivée disposés à côté et des chaussées pour véhicules routiers s'étendant également parallèlement, au-dessus desquels sont prévues plusieurs grues portiques (2, 3) s'étendant parallèlement en direction longitudinale des voies, et auxquels sont disposées des stations de suspension de charges qui permettent un déplacement des charges transversalement à la direction longitudinale des chaussées,
caractérisée par une zone de transbordement direct de la longueur d'un train, disposée parallèlement à la direction longitudinale des voies, comprenant une ou plusieurs voies de transbordement (12, 13), une voie de chargement (5) et la voie de circulation (7) pour les camions (11) de clients, une zone de transbordement d'entrepôt, s'y raccordant et s'étendant parallèlement à elle, comprenant la voie de chargement (6), la voie de circulation (8) pour les camions (11) de clients, une ou plusieurs voies d'arrêt de courte durée (14) et une voie d'arrêt longue durée (15) pour les unités de chargement (9), la zone de transbordement direct et la zone de transbordement d'entrepôt étant respectivement recouvertes d'une demi-grue portique (2 ou respectivement 3) et plusieurs transporteurs transversaux (4) pour des conteneurs et des conteneurs interchangeables étant disposés en direction longitudinale des voies, mobiles transversalement à la direction longitudinale de la voie (1) de roulement médiane des grues, en hauteur sur piliers, réalisée en saillie à l'intérieur de la portée des bras des demi-grues portiques (2, 3) et coopérant avec ceux-ci, et une aire de stockage, se trouvant en dehors de l'installation de transbordement, pour des semi-remorques ainsi qu'une ou plusieurs voies de stockage (16) prévues à l'extérieur, parallèlement à la voie de transbordement (12) dans la zone de transbordement direct, pour des unités de chargement (9) passant de train à train.
